# EUROPEAN PATENT APPLICATION

(11) **EP 2 164 259 A1**
(43) Date of publication of application: **17.03.2010**
(21) Application number: 08776769.5
(22) Date of filing: 03.07.2008
(51) Int. Cl.: H04N 7/173, H04L 12/28

(54) **DIGITAL VIDEO TRANSMISSION SYSTEM**

(30) Priority: 05.07.2007 JP 2007177534
(71) Applicant: Mitsubishi Electric Corporation, Chiyoda-ku Tokyo 100-8310 (JP)
(72) Inventor: ABE, Hironobu, Tokyo 100-8310 (JP); KAWAMURA, Hideo, Tokyo 100-8310 (JP); HIKINO, Shin, Tokyo 100-8310 (JP); KISHIDA, Yukinori, Tokyo 100-8310 (JP)
(74) Representative: Pfenning, Meinig & Partner GbR
(86) International application number: PCT/JP2008/001757
(87) International publication number: WO 2009/004813

(57) **Abstract**

Each of a plurality of digital video transmitting devices 100-1 and 100-2 is provided with an IEEE802.3 PHY unit 104 for transmitting video data via a digital network based on the IEEE802.3 standards. A digital video receiving device 200 is provided with a plurality of IEEE802.3 PHY units 201-1 and 201-2 for receiving the video data from the plurality of digital video transmitting devices 100-1 and 100-2 respectively. The IEEE802.3 PHY units 104 of the digital video transmitting devices 100-1 and 100-2 are connected to the IEEE802.3 PHY units 201-1 and 201-2 of the digital video receiving device 200 respectively via an IEEE802.3 network cable.

## Description

### Field of the Invention

The present invention relates to a digital video transport system equipped with a plurality of digital video transmitting devices each of which outputs video data in a digital format, and a digital video receiving device which receives video data from these digital video transmitting devices.

### Background of the Invention

Digital video transport systems have a feature of being able to set up a resolution and a frame rate for video data to be transmitted freely, and being able to also transmit data, such as audio data, onto the same network in addition to video data, as compared with analog video transmission systems.
In a conventional digital video transport system, in a case in which a plurality of digital video transmitting devices are connected to one digital video receiving device, a network is constructed by installing a repeater hub on a midway digital network (for example, refer to the patent reference 1).

[Patent reference 1] JP,2003-163674,A

A problem with conventional digital video transport systems is that although a plurality of digital video transmitting devices can be connected to one digital video receiving device, because they are based on the premise that the connection is made via a repeater hub, the number of digital video transmitting devices which can be connected to one digital video receiving device is restricted according to the transmission band of the interface of the digital video receiving device.

On the other hand, by mounting a video encoding function in each digital image transmission apparatus to make each digital video transmitting device compress video data and transmit this compressed video data via a digital network, the number of digital video transmitting devices which can be connected to one digital video receiving device can be increased. However, in this case, it is necessary to provide a video encoding function for each digital video transmitting device. A problem is that because the video encoding function usually requires a system LSI for exclusive use, the total cost of the system increases with the increase in the system scale.

The present invention is made in order to solve the above-mentioned problems, and it is therefore an object of the present invention to a digital video transport system which enables a large number of digital video transmitting devices to be connected to one digital video receiving device without being influenced by the transmission band of the interface of the digital video receiving device, and which does not have to provide any structural component, such as a video encoding function, for each digital video transmitting device, thereby being able to reduce the total cost of the system. Disclosure of the Invention

In accordance with the present invention, there is provided a digital video transport system including: a plurality of digital video transmitting devices each of which outputs video data in a digital format as data destined for a standardized digital network; and a digital video receiving device having a network interface interfacing with the standardized digital network to directly connect with each of the plurality of digital video transmitting devices, for receiving the video data in a digital format via the network interface.

Because in the digital video transport system in accordance with the present invention, the plurality of digital video transmitting devices are connected directly to the single digital video receiving device via the standardized digital network, a large number of digital video transmitting devices can be connected to the single digital video receiving device without being influenced by the band of transmission of the interface of the digital video receiving device, and the total cost of the system can be reduced.

### Brief Description of the Figures

[Fig. 1] Fig. 1 is a configuration diagram showing a digital video transport system in accordance with Embodiment 1 of the present invention;
[Fig. 2] Fig. 2 is an explanatory drawing showing an IEEE802.3 MAC frame format in the digital video transport system in accordance with Embodiment 1 of the present invention;
[Fig. 3] Fig. 3 is an explanatory drawing showing an example of the format of IEEE802.3 frames constructed by the video data transmitting unit in the digital video transport system in accordance with Embodiment 1 of the present invention;
[Fig. 4] Fig. 4 is a flow chart showing the operation of a video data transmitting unit in the digital video transport system in accordance with Embodiment 1 of the present invention;
[Fig. 5] Fig. 5 is a flow chart showing the operation of a video data receiving unit in the digital video transport system in accordance with Embodiment 1 of the present invention;
[Fig. 6] Fig. 6 is an explanatory drawing showing an encoding process carried out by a video encoding unit in the digital video transport system in accordance with Embodiment 1 of the present invention;
[Fig. 7] Fig. 7 is a configuration diagram showing a digital video transport system in accordance with Embodiment 2 of the present invention;
[Fig. 8] Fig. 8 is an explanatory drawing showing an IEEE802.3 frame format in the digital video transport system in accordance with Embodiment 2 of the present invention;
[Fig. 9] Fig. 9 is a configuration diagram showing a digital video transport system in accordance with Embodiment 3 of the present invention; and
[Fig. 10] Fig. 10 is an explanatory drawing showing an IEEE802.3 frame format in the digital video transport system in accordance with Embodiment 3 of the present invention.

### Preferred Embodiments of the Invention

Hereafter, in order to explain this invention in greater detail, the preferred embodiments of the present invention will be described with reference to the accompanying drawings. Embodiment 1.

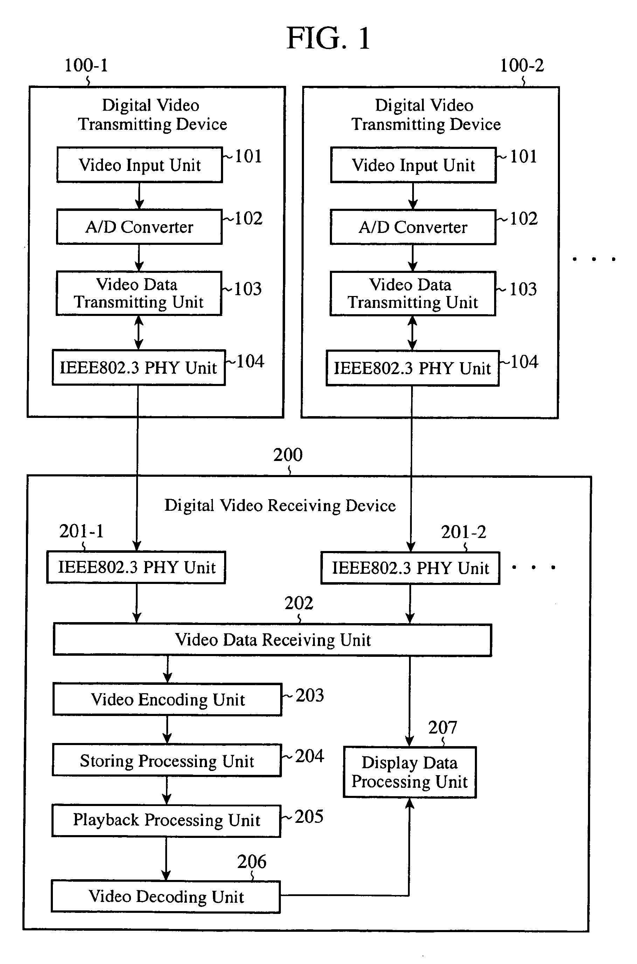

Fig. 1 is a configuration diagram showing a digital video transport system in accordance with Embodiment 1 of the present invention.
In the figure, the digital video transport system is comprised of a plurality of digital video transmitting devices 100-i (i=1, 2, ...) and a digital video receiving device 200. Although two digital video transmitting devices are shown as the plurality of digital video transmitting devices 100-i in the figure, there is no limit on the number of digital video transmitting devices. Each of the digital video transmitting devices 100-i outputs video data in a digital format, and is directly connected to the digital video receiving device 200 via a digital interface cable based on the IEEE802.3 standards which is a standardized digital network. The digital video receiving device 200 receives digital video data outputted from the plurality of digital video transmitting devices 100-i, and encodes and stores or displays these digital image data.

Each digital video transmitting device 100-i is provided with a video input unit 101, an A/D converter 102, a video data transmitting unit 103, and an IEEE802.3 PHY unit 104. The video input unit 101 is a functional unit for accepting video data in an analog format. The A/D converter 102 is a functional unit for converting the video data in an analog format outputted from the video input unit 101 into video data in a digital format. The video data transmitting unit 103 is a functional unit for carrying out a transmitting process of transmitting the video data in a digital format outputted by the A/D converter 102. The IEEE802.3 PHY unit 104 is an interface for transmitting the video data to the IEEE802.3 network.

The digital video receiving device 200 is provided with IEEE802.3 PHY units 201-i (i=1, 2, ...), a video data receiving unit 202, a video encoding unit 203, a storing processing unit 204, a playback processing unit 205, a video decoding unit 206, and a display data processing unit 207. Each IEEE802.3 PHY unit 201-i is an interface directly connected to the corresponding digital video transmitting device 100-i, for receiving data in an IEEE802.3 frame form via the IEEE802.3 network cable. The video data receiving unit 202 is a functional unit for receiving video data from each digital video transmitting device 100-i via the corresponding IEEE802.3 PHY unit 201-i. The video encoding unit 203 is a functional unit for carrying out an encoding process of encoding the video data received by the video data receiving unit 202, and the storing processing unit 204 is a functional unit for storing the video data encoded by the video encoding unit 203. The playback processing unit 205 is a functional unit for reading the video data stored in the storing processing unit 204. The video decoding unit 206 is a functional unit for carrying out a decoding process of decoding the video data read by the playback processing unit 205. The display data processing unit 207 is a functional unit for performing a display control process on either the video data received by the video data receiving unit 202 or the video data decoded by the video decoding unit 206.

Next, the operation of the digital video transport system in accordance with Embodiment 1 will be explained.
Each digital video transmitting device 100-i accepts video data via the video input unit 101 thereof, and converts the video data in an analog format inputted thereto via the video input unit 101 into video data in a digital format by using the A/D converter 102 thereof.
The format of the video data in a digital format into which the analog video data is converted is defined by a size, a color expression form, and a frame rate. The size is defined as the number of pixels in each of vertical and horizontal directions, and is shown as follows: SXVGA (1280×960), VGA (640×480), or QVGA (320×40). The color expression form is defined as YUV422 (16 bits per pixel), RGB (24 bits per pixel), or the like. The frame rate is defined as the number of frames per second, and is shown as follows: 15 frames per second or 30 frames per second.

The video data in a digital format, into which the analog video data are converted by the A/D converter 102, are converted into video data in a defined format by the video data transmitting unit 103, and the video data in a defined format are made to pass through the IEEE802.3 PHY unit 104 so that the video data in a defined format are converted into video data in a frame form which can be transmitted via the IEEE802.3 network.

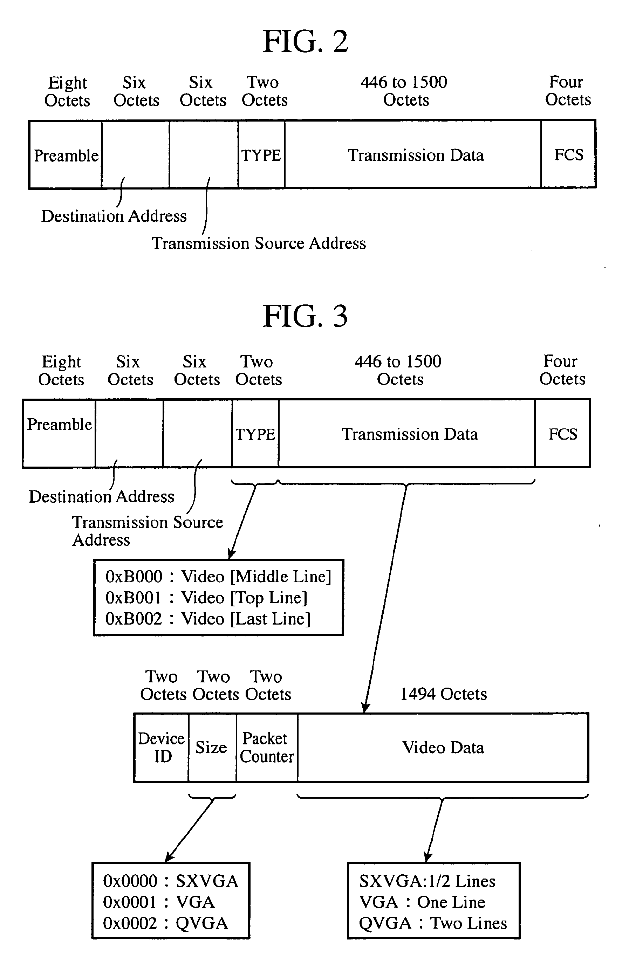

In Fig. 2, an IEEE802.3 MAC frame format is shown as an example of the frame form which is generated through the IEEE802.3 PHY unit and can be transmitted via the IEEE802.3 network.
By sequentially packetizing the video data in a digital format into packets according to the format shown in Fig. 2 and delivering the packets to the IEEE802.3 PHY unit 104, the video data transmitting unit 103 transmits the video data in a digital format to the digital video receiving device 200 via the IEEE802.3 network.

Fig. 3 is an explanatory drawing showing an example of the form of IEEE802.3 frames which are constructed by the video data transmitting unit 103 in accordance with Embodiment 1 of the present invention. The explanation about the example of Fig. 3 is based on the premise that the color expression form is YUV422 (16 bits per pixel).
In the example of Fig. 3, while "TYPE" of the IEEE802.3 MAC frame format shown in Fig. 2 is enhanced, and transmission of video data via the IEEE802.3 network is supported by defining "transmission data" in detail.
Generally, the video data in a digital format outputted by the A/D converter 102 are converted into video data in a defined format, such as "size: SXVGA", "color expression form: YUV422 (16 bits per pixel)", and "frame rate: 15 frames per second", by the video data transmitting unit 103. Furthermore, video data can be handled as a set of plural frames which are aligned in a time sequence, and each frame can be handled as a set of pixels each having data about color information. The video data transmitting unit 103 divides each frame of the video data into lines, constructs an IEEE802.3 frame for each line, and transmits the video data by using a method of transmitting them in units of plural IEEE 802.3 frames.

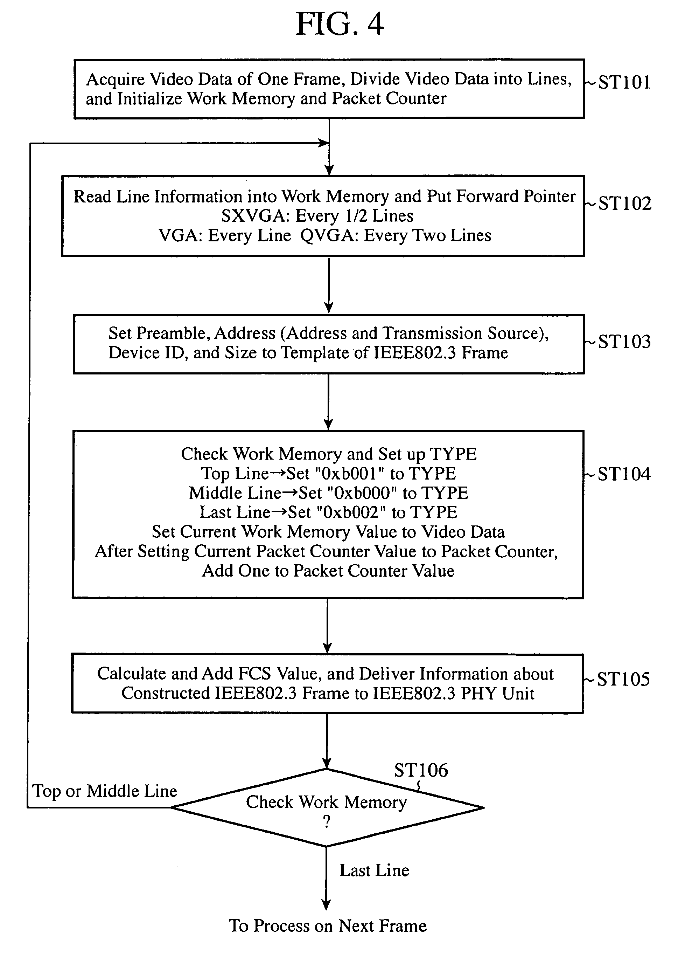

Fig. 4 is a chart showing a flow of an IEEE802.3 frame constructing process shown in Fig. 3 which is carried out by the video data transmitting unit 103 of each digital video transmitting device 100-i in accordance with Embodiment 1 of the present invention at the time of transmission of video data.
The video data transmitting unit 103 receives the video data on a frame-by-frame basis and divides each inputted frame into lines (step ST101). The number of lines included in each frame is 960 in the case of SXVGA, 480 in the case of VGA, and 320 in the case of QVGA. A work memory and a packet counter not shown are initialized.
Next, an IEEE802.3 frame is constructed for every line according to the format shown in Fig. 3 (steps ST102 to ST106).
In this case, a preamble, a destination address, a transmission source address, and FCS are based on the IEEE802.3 frame format defined by the general IEEE802.3 standards (steps ST3 and ST105).

TYPE is set to "0×B001" for an IEEE802.3 frame including the top line of a frame, TYPE is set to "0×B000" for an IEEE802.3 frame including a middle line, and TYPE is set to "0×B002" for an IEEE802.3 frame including the last line (step ST104). In the IEEE802.3 standards, TYPE typically defines a protocol stack which an upper layer (a network layer) uses. For example, in a case in which the protocol stack of the upper layer is IP, "0×0800" is set to TYPE. In Embodiment 1, because between each digital video transmitting device 100-i and the digital video receiving device 200, their IEEE802.3 PHY units are directly to each other via the IEEE802.3 network cable, the implementation of the protocol stack of the upper layer can be eliminated. Therefore, in Embodiment 1, TYPE is enhanced so as to support transmission of video data on the IEEE802.3 network.

The ID of each digital video transmitting device 100-i is inputted to a device ID (step ST103) . In the configuration of the network of the digital video transport system in accordance with Embodiment 1, generally, a plurality of digital video transmitting devices 100-i are connected to one digital video receiving device 200. Therefore, different device IDs are set to the plurality of digital video transmitting device 100-i connected to the same digital video receiving device 200, and the digital video receiving device 200 uses the different device IDs as identifiers for respectively identifying the plurality of digital video transmitting devices 100-i connected thereto. The size of the digital video data to be transmitted is set to a size (step ST103). In Embodiment 1, in the case of SXVGA, "0×0000" is set to the size, in the case of VGA, "0×0001" is set to the size, and, in the case of QVGA, "0×0002" is set to the size.

When transmitting one frame of the video data, each digital video transmitting device divides the frame into a plurality of IEEE802.3 frames to transmit them, and sets the packet counter at zero and then makes the counter count up from 0 for every IEEE802.3 frame (step ST104) . The packet counter is planned to be reset every frame, and each digital video transmitting device resets the packet counter to zero when transmitting the top line of each frame (step ST101) and, after that, increments the counter value by 1 every time when constructing an IEEE802.3 frame (step ST104).
For the video data, each digital video transmitting device sets a frame of the video data to be transmitted for every line.
Because the frame length is fixed, each digital video transmitting device sets up data for every 1/2 lines in the case in which the size is SXVGA, sets up data for every line in the case in which the size is VGA, and sets up data every two lines in the case in which the size is QVGA (step ST102). Each digital video transmitting device performs a padding process on a portion, among the video data, in which any data are not set up.

Next, the operation of the digital video receiving device 200 will be explained.
In the digital video receiving device 200 in accordance with the present invention, the video data receiving unit 202 which is connected with the plurality of digital video transmitting devices 100-i via the plurality of IEEE802.3 PHY units 201-i and via the IEEE802.3 network cables and which can carry out a receiving process of receiving the video data simultaneously transmitted from the plurality of digital video transmitting devices 100-i is provided so that a band for the transmission of the video data from the transmitting devices to the receiving device is ensured. Furthermore, a format which is an extension of the standard format of IEEE802.3 frames is selected as the transmission format of video data. As a result, as the IEEE802.3 PHY units and the IEEE802.3 network cables, standard products can be used.

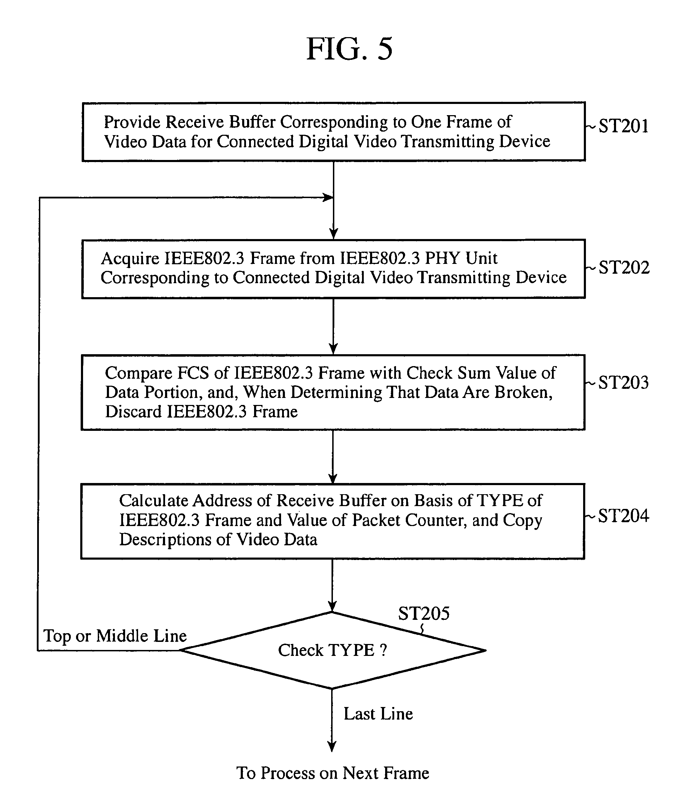

A flow of the video data receiving process carried out by the video data receiving unit of the digital video receiving device in accordance with Embodiment 1 of the present invention is shown in Fig. 5.
In the video data receiving unit 202, a receive buffer for video data reception is disposed for each IEEE802.3 PHY unit 201-i connected to the corresponding digital video transmitting device 100-i first (step ST201). The video data receiving unit then reads received IEEE802.3 frame data from each IEEE802.3 PHY unit 201-i (step ST202). The video data receiving unit checks whether or not the received data are broken on the basis of the FCS portion of the IEEE802.3 frame, and, when determining that the data are broken, discards the IEEE802.3 frame data (step ST203).
As to data which have passed through the error checking and have been received normally, the video data receiving unit calculates the address of the receive buffer on the basis on TYPE and the value of the packet counter of the data. For example, when TYPE is "0×B001", the video data receiving unit determines, as the address of the receive buffer, that of the top of the receive buffer, when TYPE is "0×B002", the video data receiving unit determines, as the address of the receive buffer, that of the end of the receive buffer, and when TYPE is "0×B000", the video data receiving unit determines, as the address of the receive buffer, that in the middle of the receive buffer, and calculates the address in the middle of the receive buffer on the basis of the packet counter value (step ST204).

Generally, when each digital video transmitting device 100-i sends out IEEE802.3 frames including video data, the packet counter values respectively set to the IEEE802.3 frames are sent out sequentially in order starting from zero, and the packet counter values are received sequentially in order starting from zero also for the IEEE802.3 frames received by the digital video receiving device 200. However, when data are discarded through the error checking of FCS by the video data receiving unit 202, a dropout occurs in the packet counter values. The video data part of the received IEEE802.3 frame is then copied to the address calculated in the above-mentioned process (step ST204).

Finally, the video data receiving unit checks TYPE, and, when determining that the line is the top one or a middle one, repeats the processes starting from the receiving process of receiving the next IEEE802.3 frame, whereas when determining that the line is the last one, carries out a process of constructing the frame of the video data on the basis of the received data, and then carries out the receiving process of receiving the next frame (step ST205). The digital video receiving device 200 in accordance with Embodiment 1 is planned to construct each frame of the video data by using only the IEEE802.3 frames which it has received normally.

The video data received by the video data receiving unit 202 are sequentially sent to the display data processing unit 207, and the display data processing unit 207 carrying out a live display process of displaying them on a monitor not shown. The video data received by the video data receiving unit are also sent to the video encoding unit 203, and the video encoding unit 203 stores them in an HDD (a hard disk drive) not shown via the storing processing unit 204 after encoding them. Furthermore, the video data stored in the HDD are sent to the display data processing unit 207 via the playback processing unit 205 and the video decoding unit 206 as needed, and the display data processing unit 207 carries out a display process of displaying them on the monitor.

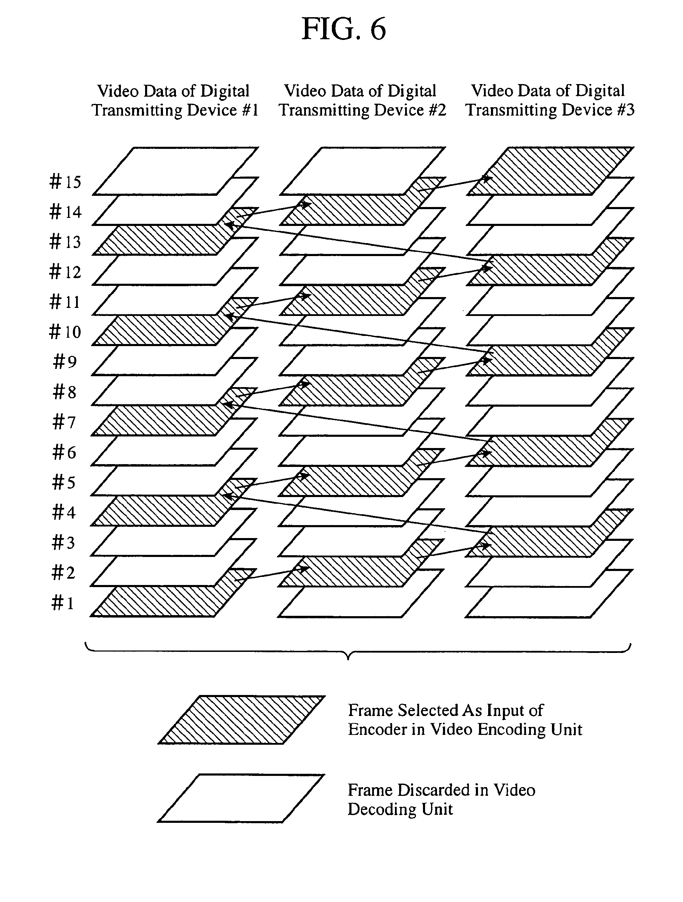

The video encoding unit 203 sequentially accepts the video data from the plurality of digital video transmitting devices 100-i which are received by the video data receiving unit 202, and performs an encoding process on the video data efficiently according to its encoding capability. For example, assuming that in the digital video transport system, three digital video transmitting devices 100-i are connected to the single digital video receiving device 200, the data formats of the video data from the plurality of transmitting devices are all "size: SXVGA", the video data are all transmitted at a "frame rate: 15 frames per second", and the encoding capability of the video encoding unit for SXVGA video is 15 frames per second at maximum, in the case of SXVGA, video data are inputted to the video encoding unit 203 at a frame rate of 45 frames per second and coded video data are outputted from the video encoding unit 203 at a frame rate of 15 frames per second. Therefore, by performing the encoding process on the video data from each digital video transmitting device 100-i while thinning out the video data at certain intervals, the video encoding unit 203 can implement the encoding process efficiently according to its encoding capability. Fig. 6 is an explanatory drawing showing a brief description of this encoding process.

Thus, the encoding process on the video data from the plurality of digital video transmitting devices can be communalized, and an increase in the system total cost which is a problem with conventional digital video transport systems can be addressed.

As mentioned above, the digital video transport system in accordance with Embodiment 1 includes a plurality of digital video transmitting devices each of which outputs video data in a digital format as data destined for a standardized digital network, and a digital video receiving device having a network interface interfacing with the standardized digital network to directly connect with each of the plurality of digital video transmitting devices, for receiving the video data in a digital format via the network interface. Therefore, a large number of digital video transmitting devices can be connected to the single digital video receiving device without being influenced by the band of transmission of the interface of the digital video receiving device, and the total cost of the system can be reduced.

Furthermore, in the digital video transport system in accordance with Embodiment 1, because the standardized digital network is based on the IEEE802.3 standards, standard goods can be used and therefore the total cost of the system can be further reduced.

In addition, in the digital video transport system in accordance with Embodiment 1, each of the digital video transmitting devices includes a video input unit for inputting video data, an A/D converter for converting the video data in an analog format inputted by the video input unit into video data in a digital format, a video data transmitting unit for performing a transmitting process of transmitting the video data in a digital format outputted by the A/D converter, and an IEEE802.3 PHY unit for transmitting the video data transmitted by the video data transmitting unit to the digital video receiving device via an IEEE802.3 network, and the digital video receiving device includes a plurality of IEEE802.3 PHY units each for carrying out network reception of the video data transmitted, via the IEEE802.3 network, from one of the digital video transmitting devices, a video data receiving unit for carrying out a receiving process of receiving the video data received by the plurality of IEEE802.3 PHY units, a video encoding unit for performing an encoding process on the plurality of video data received by the video data receiving unit, a storing processing unit for storing the video data on which the encoding process is performed by the video encoding unit, a playback processing unit for reading the video data stored in the storing processing unit, a video decoding unit for performing a decoding process of decoding the video data read by the playback processing unit, and a display data processing unit for performing a display control process on either the video data received by the video data receiving unit or the video data decoded by the video decoding unit. Therefore, the digital video transport system can be constructed in such a way that a large number of digital video transmitting devices can be connected to the single digital video receiving device, and any structural component, such as a video encoding function, does not have to be disposed in each of the digital video transmitting devices and therefore the total cost of the system can be reduced.

### Embodiment 2.

A digital video transport system in accordance with Embodiment 2 includes an audio transmission function of transmitting audio data from each transmitting device to a receiving device in addition to the components of the digital video transport system in accordance with Embodiment 1.

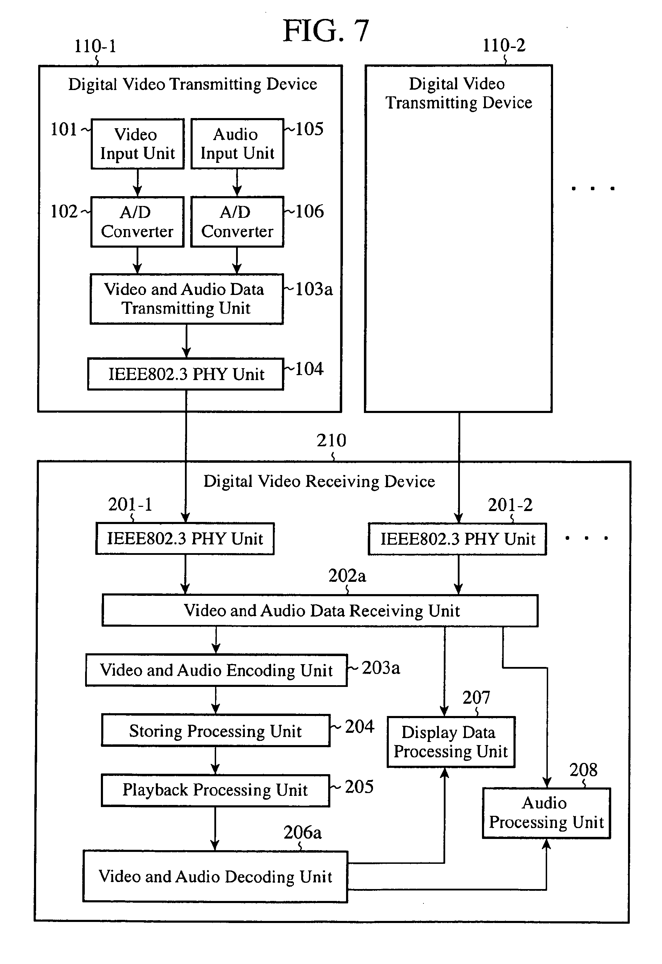

Fig. 7 is a configuration diagram of the digital video transport system in accordance with Embodiment 2.
The system shown is comprised of digital video transmitting devices 110-i (i=1, 2, ...) and a digital video receiving device 210. Each of the digital video transmitting devices 110-i is provided with a video input unit 101, an A/D converter 102, a video and audio data transmitting unit 103a, an IEEE802.3 PHY unit 104, an audio input unit 105, and an A/D converter 106. Because the internal structure of each digital video transmitting device 110-i is the same, Fig. 7 shows only the internal structure of the digital video transmitting device 110-1.

The video input unit 101 and the A/D converter 102 have the same structures as those in accordance with Embodiment 1, and the A/D converter 102 constructs a video data A/D converter. The audio input unit 105 is a functional unit of inputting audio data, and the A/D converter 106 is an audio data A/D converter for converting the audio data inputted by the audio input unit 105. The video and audio data transmitting unit 103a is a functional unit of carrying out a transmitting process of transmitting the video data on which A/D conversion is performed by the A/D converter 102, and the audio data on which A/D conversion is performed by the A/D converter 106. The IEEE802.3 PHY unit 104 is an interface for transmitting the video data and the audio data from the video and audio data transmitting unit 103a via a network cable based on the IEEE802.3 standards.

The digital video receiving device 210 is provided with IEEE802.3 PHY units 201-i (i=1, 2, ... ), a video and audio data receiving unit 202a, a video and audio encoding unit 203a, a storing processing unit 204, a playback processing unit 205, a video and audio decoding unit 206a, a display data processing unit 207, and an audio processing unit 208. Each of the IEEE802.3 PHY units 201-i is an interface for receiving the video data and the audio data which are transmitted from the corresponding digital video transmitting device 110-i. The video and audio data receiving unit 202a, the video and audio encoding unit 203a, and the video and audio decoding unit 206a have functions of processing audio data in addition to the functions of processing video data of the video data receiving unit 202, the video encoding unit 203, and the video decoding unit 206 in accordance with Embodiment 1 respectively. Furthermore, the storing processing unit 204 and the playback processing unit 205 are functional units of performing a storing process and a reading process on the data output from the video and audio encoding unit 203a respectively, like those in accordance with Embodiment 1. In addition, the display data processing unit 207 is a functional unit of carrying out a display process of displaying either the video data from the video and audio data receiving unit 202a or the video data from the video and audio decoding unit 206a, and the audio processing unit 208 is a functional unit of carrying out an output process of outputting either the audio data from the video and audio data receiving unit 202a or the audio data from the video and audio decoding unit 206a.

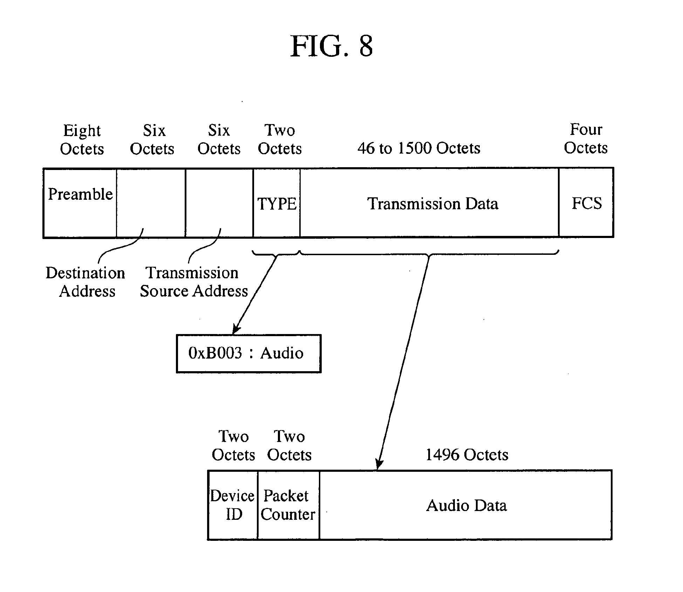

Fig. 8 is an explanatory drawing showing an IEEE802.3 frame format which the video and audio data transmitting unit 103a in accordance with Embodiment 2 handles when transmitting digital audio data.
This format is an extension of the IEEE802.3 frame format, as shown in Fig. 3, at the time of transmitting digital transmission data. When transmitting audio data, video data and the audio data are discriminated from each other by setting "0×B003" to TYPE.
Furthermore, at the time of reception of each IEEE802.3 frame, the video and audio data receiving unit 202a disposed in the digital video receiving device 210 checks TYPE first to discriminate between the video data and the audio data and then carries out the receiving process of receiving each of them. Thus, the digital video transport system implements transport of video and audio via the same network.

As mentioned above, in the digital video transport system in accordance with Embodiment 2, each of the digital video transmitting devices includes a video input unit for inputting video data, a video data A/D converter for converting the video data in an analog format inputted by the video input unit into video data in a digital format, an audio input unit for inputting audio data, an audio data A/D converter for converting the audio data in an analog format inputted by the audio input unit into audio data in a digital format, a video and audio data transmitting unit for performing a transmitting process of transmitting the video data in a digital format outputted by the video data A/D converter and the audio data in a digital format outputted by the audio data A/D converter, and an IEEE802.3 PHY unit for transmitting the video data and the audio data transmitted by the video and audio data transmitting unit to the digital video receiving device via an IEEE802.3 network, and the digital video receiving device includes a plurality of IEEE802.3 PHY units each for carrying out network reception of the video data and the audio data transmitted, via the IEEE802.3 network, from one of the digital video transmitting devices, a video and audio data receiving unit for carrying out a receiving process of receiving the video data and the audio data received by the plurality of IEEE802.3 PHY units, a video and audio encoding unit for performing an encoding process on the plurality of video data and audio data received by the video and audio data receiving unit, a storing processing unit for storing the video data and the audio data on which the encoding process is performed by the video and audio encoding unit, a playback processing unit for reading the video data and the audio data stored in the storing processing unit, a video and audio decoding unit for performing a decoding process of decoding the video data and the audio data read by the playback processing unit, a display data processing unit for performing a display control process on either the video data received by the video and audio data receiving unit or the video data decoded by the video and audio decoding unit, and an audio processing unit for performing an output process on either the audio data received by the video and audio data receiving unit or the audio data decoded by the video and audio decoding unit. The system which performs not only transmission of video but also transmission of audio can provide the same advantages as those provided by Embodiment 1.

### Embodiment 3.

A digital video transport system in accordance with Embodiment 3 includes a function of transmitting and receiving a command in addition to the components of the digital video transport system in accordance with Embodiment 1.

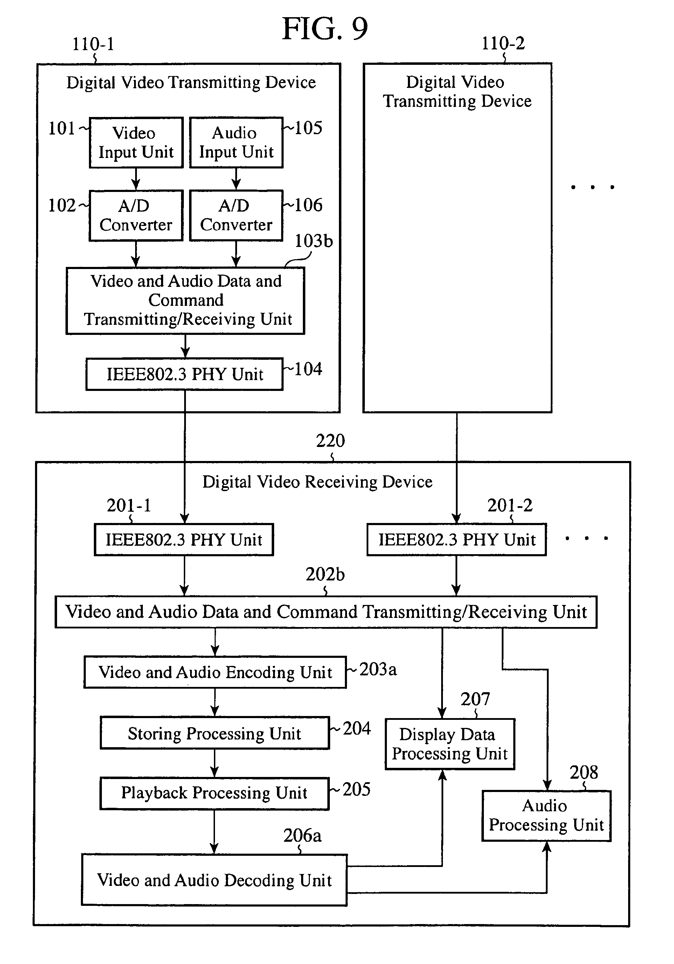

Fig. 9 is a configuration diagram of the digital video transport system in accordance with Embodiment 3.
The digital video transport system in accordance with Embodiment 3 is comprised of a plurality of digital video transmitting devices 120-i (i=1, 2, ...) and a digital video receiving device 220. Each of the digital video transmitting devices 120-i is provided with a video input unit 101, A/D converters 102 and 106, a video and audio data and command transmitting/receiving unit 103b, an IEEE802.3 PHY unit 104, and an audio input unit 105. The digital video receiving device 220 is provided with IEEE802.3 PHY units 201-i (i=1, 2, ...), a video and audio data and command transmitting/receiving unit 202b, a storing processing unit 204, a playback processing unit 205, a video and audio decoding unit 206a, a display data processing unit 207, and an audio processing unit 208.

The video and audio data and command transmitting/receiving units 103b and 202b include functions of transmitting and receiving a command in addition to the functions of the video and audio data transmitting unit 103a and the video and audio data receiving unit 202a in accordance with Embodiment 2 respectively. Because the other components are the same as those in accordance with Embodiment 2, the explanation of the components will be omitted hereafter.

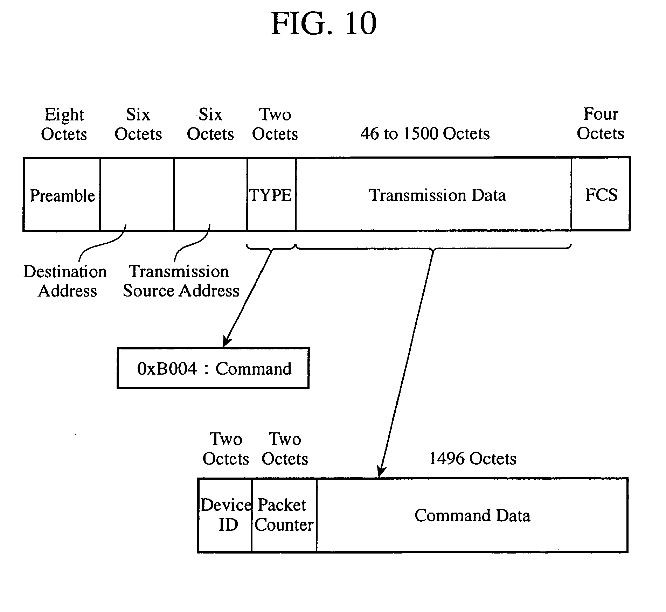

Fig. 10 is an explanatory drawing showing an IEEE802.3 frame format which the video and audio data and command transmitting/receiving unit disposed in either each of the digital video transmitting devices or the digital video receiving device in accordance with Embodiment 3 handles when transmitting or receiving a command for control.
This format is an extension of the IEEE802.3 frame format, as shown in Fig. 3, at the time of transmitting digital transmission data. When transmitting and receiving a command for control, the command for control is discriminated from video data and audio data by setting "0×B004" to TYPE. TYPE is therefore checked first to discriminate between a command for control and video data and audio data when the command is transmitted and received, and an appropriate process is performed on the command for control. Thus, the digital video transport system implements transmission and reception of a command for control, transport of video and audio via the same network.

In the above-mentioned example, the function of transmitting and receiving a command is added to the structure in accordance with Embodiment 2, as previously explained. As an alternative, the function of transmitting and receiving a command can be added to the structure in accordance with Embodiment 1. More specifically, in this case, the above-mentioned video and audio data and command transmitting/receiving unit 103b serves as a video and command transmitting/receiving unit, and the above-mentioned video and audio data and command transmitting/receiving unit 202b serves as a video and command transmitting/receiving unit.

As mentioned above, in the digital video transport system in accordance with Embodiment 3, each of the digital video transmitting devices includes, instead of the video data transmitting unit, a video data and command transmitting/receiving unit for performing a process of transmitting the video data, and transmission and reception of a control command, and the IEEE802.3 PHY unit carries out network transmission of the video data, and transmits and receives the control command via the IEEE802.3 network, and the digital video receiving device includes, instead of the video data receiving unit, a video data and command transmitting/receiving unit for performing a process of receiving the video data, and transmission and reception of the control command, and each of the IEEE802.3 PHY units carries out network reception of the video data, and transmits and receives the control command via the IEEE802.3 network. The system which performs not only transmission of video but also transmission and reception of a command can provide the same advantages as those provided by Embodiment 1.

Furthermore, in the digital video transport system in accordance with Embodiment 3, each of the digital video transmitting devices includes, instead of the video and audio data transmitting unit, a video and audio data and command transmitting/receiving unit for performing a process of transmitting the video data and the audio data, and transmission and reception of a control command, and the IEEE802.3 PHY unit carries out network transmission of the video data and the audio data, and transmits and receives the control command via the IEEE802.3 network, and the digital video receiving device includes, instead of the video and audio data receiving unit, a video and audio data and command transmitting/receiving unit for performing a process of receiving the video data and the audio data, and transmission and reception of the control command, and each of the IEEE802.3 PHY units carries out network reception of the video data and the audio data, and transmits and receives the control command via the IEEE802.3 network. The system which performs not only transmission of video and audio but also transmission and reception of a command can provide the same advantages as those provided by Embodiment 2.

### Industrial Applicability

As mentioned above, the digital video transport system in accordance with the present invention includes a plurality of digital video transmitting devices each of which outputs video data in a digital format as data destined for a standardized digital network, and a digital video receiving device having a network interface interfacing with the standardized digital network to directly connect with each of the plurality of digital video transmitting devices, for receiving the video data in a digital format via the network interface. Therefore, it is suitable for use as a digital video transport system in which a large number of digital video transmitting devices is connected to a single digital video receiving device.

## Claims

1. A digital video transport system comprising:
a plurality of digital video transmitting devices each of which outputs video data in a digital format as data destined for a standardized digital network; and
a digital video receiving device having a network interface interfacing with said standardized digital network to directly connect with each of said plurality of digital video transmitting devices, for receiving said video data in a digital format via said network interface.

2. The digital video transport system according to claim 1, **characterized in that** the standardized digital network is a network based on IEEE802.3 standards.

3. The digital video transport system according to claim 2, **characterized in that**
each of the digital video transmitting devices includes:
a video input unit for inputting video data;
an A/D converter for converting the video data in an analog format inputted by said video input unit into video data in a digital format;
a video data transmitting unit for performing a transmitting process of transmitting the video data in a digital format outputted by said A/D converter; and
an IEEE802.3 PHY unit for transmitting the video data transmitted by said video data transmitting unit to the digital video receiving device via an IEEE802.3 network, and
said digital video receiving device includes:
a plurality of IEEE802.3 PHY units each for carrying out network reception of the video data transmitted, via the IEEE802.3 network, from one of said digital video transmitting devices;
a video data receiving unit for carrying out a receiving process of receiving the video data received by said plurality of IEEE802.3 PHY units;
a video encoding unit for performing an encoding process on the plurality of video data received by said video data receiving unit;
a storing processing unit for storing the video data on which the encoding process is performed by said video encoding unit;
a playback processing unit for reading the video data stored in said storing processing unit;
a video decoding unit for performing a decoding process of decoding the video data read by said playback processing unit; and
a display data processing unit for performing a display control process on either the video data received by said video data receiving unit or the video data decoded by said video decoding unit.

4. The digital video transport system according to claim 2, **characterized in that**
each of the digital video transmitting devices includes:
a video input unit for inputting video data;
a video data A/D converter for converting the video data in an analog format inputted by said video input unit into video data in a digital format;
an audio input unit for inputting audio data;
an audio data A/D converter for converting the audio data in an analog format inputted by said audio input unit into audio data in a digital format;
a video and audio data transmitting unit for performing a transmitting process of transmitting the video data in a digital format outputted by said video data A/D converter and the audio data in a digital format outputted by said audio data A/D converter; and
an IEEE802.3 PHY unit for transmitting the video data and the audio data transmitted by said video and audio data transmitting unit to the digital video receiving device via an IEEE802.3 network, and
said digital video receiving device includes:
a plurality of IEEE802.3 PHY units each for carrying out network reception of the video data and the audio data transmitted, via the IEEE802.3 network, from one of said digital video transmitting devices;
a video and audio data receiving unit for carrying out a receiving process of receiving the video data and the audio data received by said plurality of IEEE802.3 PHY units;
a video and audio encoding unit for performing an encoding process on the plurality of video data and audio data received by said video and audio data receiving unit;
a storing processing unit for storing the video data and the audio data on which the encoding process is performed by said video and audio encoding unit;
a playback processing unit for reading the video data and the audio data stored in said storing processing unit;
a video and audio decoding unit for performing a decoding process of decoding the video data and the audio data read by said playback processing unit;
a display data processing unit for performing a display control process on either the video data received by said video and audio data receiving unit or the video data decoded by said video and audio decoding unit; and
an audio processing unit for performing an output process on either the audio data received by said video and audio data receiving unit or the audio data decoded by said video and audio decoding unit.

5. The digital video transport system according to claim 3, **characterized in that**
each of the digital video transmitting devices includes, instead of the video data transmitting unit, a video data and command transmitting/receiving unit for performing a process of transmitting the video data, and transmission and reception of a control command, and the IEEE802.3 PHY unit carries out network transmission of said video data, and transmits and receives said control command via the IEEE802.3 network, and
the digital video receiving device includes, instead of the video data receiving unit, a video data and command transmitting/receiving unit for performing a process of receiving the video data, and transmission and reception of the control command, and each of the IEEE802.3 PHY units carries out network reception of said video data, and transmits and receives said control command via the IEEE802.3 network.

6. The digital video transport system according to claim 4, **characterized in that**
each of the digital video transmitting devices includes, instead of the video and audio data transmitting unit, a video and audio data and command transmitting/receiving unit for performing a process of transmitting the video data and the audio data, and transmission and reception of a control command, and the IEEE802.3 PHY unit carries out network transmission of said video data and said audio data, and transmits and receives said control command via the IEEE802.3 network, and
the digital video receiving device includes, instead of the video and audio data receiving unit, a video and audio data and command transmitting/receiving unit for performing a process of receiving the video data and the audio data, and transmission and reception of the control command, and each of the IEEE802.3 PHY units carries out network reception of said video data and said audio data, and transmits and receives said control command via the IEEE802.3 network.
